(19) **Europäisches Patentamt / European Patent Office / Office européen des brevets**

(11) **EP 2 999 268 B1**

(12) **EUROPEAN PATENT SPECIFICATION**

(45) Date of publication and mention
of the grant of the patent:
**07.11.2018 Bulletin 2018/45**

(51) Int Cl.:
***H04W 36/00*** *(2009.01)*

(21) Application number: **14814357.1**

(22) Date of filing: **06.03.2014**

(86) International application number:
**PCT/CN2014/072944**

(87) International publication number:
**WO 2014/201878 (24.12.2014 Gazette 2014/52)**

(54) **WIRELESS FIDELITY (WI-FI) MONITORING METHOD AND DEVICE**

WI-FI-ÜBERWACHUNGSVERFAHREN UND VORRICHTUNG

PROCÉDÉ ET DISPOSITIF DE SURVEILLANCE DE WI-FI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2013 CN 201310242889**

(43) Date of publication of application:
**23.03.2016 Bulletin 2016/12**

(73) Proprietor: **Huawei Technologies Co., Ltd.
Longgang District
Shenzhen, Guangdong 518129 (CN)**

(72) Inventors:
• **NI, Rui
Shenzhen
Guangdong 518129 (CN)**
• **WANG, Ningjuan
Shenzhen
Guangdong 518129 (CN)**

• **LI, Jing
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**EP-A2- 1 133 208       CN-A- 101 437 269
US-A1- 2003 139 197    US-A1- 2006 146 768
US-A1- 2006 268 906    US-A1- 2009 122 760**

• **N/A: "Lb83 Normativetext Kwak Changes ;
11-06-0785-01-000k-lb83-normativetext-kwak
-changes", IEEE DRAFT;
11-06-0785-01-000K-LB83-NORMATIVETEXT-K
WAK -CHANGES, IEEE-SA MENTOR,
PISCATAWAY, NJ USA, vol. 802.11k, no. 1, 18 May
2006 (2006-05-18), pages 1-58, XP017686975,
[retrieved on 2006-05-18]**

**Description**

**TECHNICAL FIELD**

The present invention relates to the technical field of wireless communications, and particularly, to a wireless fidelity Wi-Fi monitoring method and apparatus.

**BACKGROUND**

Just like Bluetooth technology, Wireless Fidelity (Wireless Fidelity, Wi-Fi) belongs to short-range wireless technology and is a network transmission standard. In daily life, it has already been widely used and brings great convenience to people. A journalist sends a manuscript on a conference site, a common people selects at will a mobile phone or multiple laptops to connect to the internet in his home, all of which cannot make without Wi-Fi.

In a scenario with a plurality of densely deployed access points (Access Point, AP), assuming that all the APs belong to a same network operator and have a same association access password, and a user can freely select which channel and which AP to be associated with, then rules of selecting an associated AP for a Wi-Fi user equipment, which are relatively simple and basic manners, include followings:

> (1) A station (Station, STA), which accesses to a wireless medium, selecting a static script configuration. The method relies on a manual selection of a user. But large quantities of optional APs will result in that the user does not know how to choose. The user instinctively selects an AP with a strongest signal. This will lead that an AP with a strong signal is associated with too many users, which results in serious collision and poor actual throughput, and an AP with a weak signal is nearly at an idle state, associated with no user.
> (2) Sorting found APs, and using the first available AP in the sequence as the associated AP. The method has great randomicity and strong correlation with the location of the user, which cannot guarantee user experience and system performance.
> (3) Selecting an AP with a maximum received signal strength indication (Received Signal Strength Indication, RSSI) for association. The method will also cause a non-ideal state that the AP with a strong signal has serious collision while an AP with a weak signal is idle.

Document EP 1133208 A2 generally relates to a method and apparatus for use in a wireless communications network searches for the best serving access point. Specifically, the document discloses that: Relative AP load levels are also considered to select the best AP. For example, if the AP with the highest communication link quality metric also has a load level which is below a threshold, that AP is selected. Load level may be represented by any number of measurements. For example, the average data throughput per user multiplied by the number of users can be calculated at the AP. Other measurement s, such the average number of bits being transmitted by the AP per second , the "CPU up-time" at the hub, and /or data buffer overflow conditions, can be monitored to indicate load.

Document US 2006/268906 A1 generally relates to distribution of performance information for wireless networks. Specifically, the document discloses that: The MP performance information may include different performance parameters as measured or detected by the MP, such as packet loss, link quality, traffic load, etc. The MP may measure these performance parameters by observing communications, counting lost packets or packet retries, detecting or measuring link quality or received signal strength, measuring link quality or received signal strength, measuring traffic load, measure average packet delay within the MP's buffers or transmission queues, etc.

**SUMMARY**

The present invention provides a wireless fidelity Wi-Fi monitoring method and apparatus. The method and apparatus provided by the present invention are used for changing the unreasonable state that in a scenario with a plurality of densely deployed access points APs in the prior art, the AP with a strong RSSI value is over loaded while the AP with a weak RSSI value nearly has no associated STA due to the existing associated AP selection method.

The invention is set out in the appended claims. The embodiments and/or examples of the following description, which are not covered by the appended claims, are considered as not being part of the present invention.

**BRIEF DESCRIPTION OF DRAWINGS**

> Fig. 1 is a schematic diagram of a structure of a typical Wi-Fi wireless network card in the prior art;

Fig. 2 is a schematic diagram of a structure of a Wi-Fi wireless network card including a monitoring apparatus of Wi-Fi wireless network card in an embodiment of the present invention;

Fig. 3 is an amplified schematic diagram of an embodiment of the present invention in which two monitor circuits Monitor 2 and Monitor 3 are added in a Low MAC processor;

Fig. 4 is a schematic diagram of a flow of a method for monitoring a time of a data transmission in an embodiment of the present invention;

Fig. 5 is a system for collecting monitoring information in embodiment 1 of the present invention;

Fig. 6 is a schematic diagram of an example of monitoring time information in an embodiment of the present invention;

Fig. 7 is a schematic diagram of a flow of a Wi-Fi monitoring method in embodiment 1 of the present invention;

Fig. 8 is a schematic diagram of a flow of another Wi-Fi monitoring method in embodiment 2 of the present invention;

Fig. 9 is a schematic diagram of a flow of another Wi-Fi monitoring method in embodiment 3 of the present invention;

Fig. 10 is a diagram of network topology of a specific application environment of a method, which is provided by an embodiment of the present invention;

Fig. 11 is a schematic diagram of a structure of a Wi-Fi monitoring apparatus in an embodiment of the present invention;

Fig. 12 is a schematic diagram of a structure of a time obtaining unit in an embodiment of the present invention; and

Fig. 13 is a schematic diagram of a structure of a service flow adjusting unit in an embodiment of the present invention.

## DESCRIPTION OF EMBODIMENTS

A Wi-Fi IEEE 802.11 protocol abides by a wireless channel sharing mechanism of carrier sense multiple access with collision avoidance (Carrier Sense Multiple Access with Collision Avoidance, CSMA/CA). A Wi-Fi wireless network card must get the right to use a channel by competition at first and then may start sending data. Thus, in Wi-Fi, there exists an unknown time difference between a time of putting data into a cache queue to be sent and a time of sending the data to a wireless channel. The time difference is affected by a variety of factors, for example, the amount of other data in the buffer queue, a priority, busy or not situation of a wireless channel, channel quality, the number of users for competition and so on. Due to the variety of influence factors, this time difference is difficult to be accurately predicted by a mathematical model.

The time difference between the time of data caching and the time of data sending is an important parameter for scheduling management and algorithm optimization of Wi-Fi. Relevent information of an actual time of data sending is desired both for optimization of a distributed single AP on quality of service (Quality of Service, QoS) of a particular service flow and cooperative transmission of a plurality of concentrated APs.

It can be known from the above-mentioned description that the time of data caching and the time of data sending indicate data transmission capacity and network access capacity of an access point AP from a certain aspect. Therefore, in a solution provided by an embodiment of the present invention, a user equipment selects a associated AP based on the time of data caching and the time of data sending. A specific implementation solution includes:

obtaining, when each AP in M APs sends N data packets within a latest preset period, a time Tbuffer of putting each data packet in the N data packets into a buffer queue and a time Tsend of sending the each data packet to a wireless channel, wherein M is an integer larger than or equal to 2, and N is an integer larger than or equal to 1;

determining an average data packet sending delay of the each AP within the latest preset period according to time Tbuffers and time Tsends of each data packet in the N data packets; and

determining whether average data packet sending delays corresponding to the M APs satisfy a first preset judgment rule, determining a target AP, whose average data packet sending delay satisfies the first judgment rule, from the M APs, and associating with the target AP.

In the embodiment of the present invention, since how to process a data packet and how to interconnect with an STA within a next period are determined according to a historical processing condition of the AP for data packet, the "latest preset period" mentioned in the embodiment of the present invention refers to a former period of the current period.

In the solution provided by the embodiment of the present invention, based on the time difference of the time of data caching and the time of data sending of each AP, an associated AP selection method based on sending delay is provided to optimize load balance of WLAN, which changes an unreasonable state that an AP with a strong RSSI value is over loaded while an AP with a weak RSSI value nearly has no associated STA, and thereby improving the throughput of WLAN network.

To better understand an above-mentioned technical solution, the above-mentioned technical solution will be illustrated below in detail in combination with an accompanying drawing and a specific implementation manner.

**Embodiment 1**

Since an method provided by an embodiment of the present invention is a Wi-Fi monitoring method based on relevent information of an actual time of data sending, an embodiment of the present invention provides a method for obtaining an actual time of data sending in Wi-Fi network, a specific implementation of which includes followings.

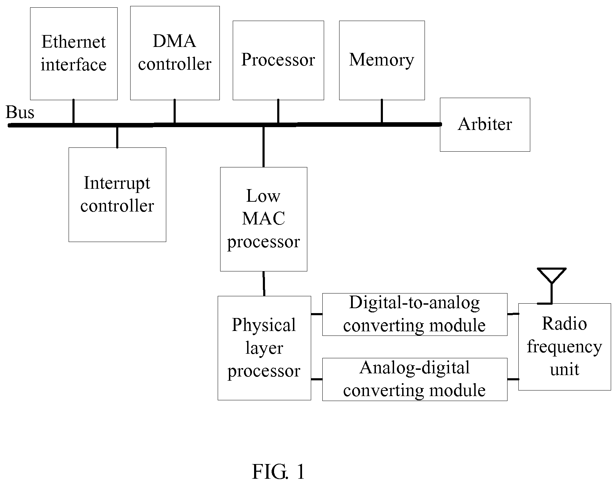

As shown in Fig. 1, a typical Wi-Fi wireless network card in the prior art is generally composed of the following modules:

a bus (Bus) and an arbiter (Arbiter), configured to connect various functional modules of the network card;
a CPU (may be a universal CPU of Intel, or a chip of ARM), configured to implement High MAC protocol logic and job scheduling of a system-on-chip;
low MAC processor (Low MAC processor), specific form of which including, but not limited to FPGA/DSP/ASIC, configured to implement a Low MAC protocol logic function,
wherein both the High MAC and the Low MAC herein belong to a part of function in an MAC layer of an IEEE 802.11 protocol, and in an engineering realization, a general difference therebetween lies in that a task with a higher real time requirement belongs to the High MAC and a task with a lower real time requirement belongs to the Low MAC;
a physical layer processor (PHY layer processor), specific of which including, but not limited to FPGA/DSP/ASIC, configured to implement a base band processing function of a physical layer;
a radio frequency subsystem, mainly including an analog-digital converter (A/D), a digital-to-analog converter (D/A), radio frequency (RF) and an antenna (Antenna), configured to send and receive a radio signal;
a memory (Memory), configured to cache network card data;
a DMA controller (DMA controller), configured to control a high speed data read-write between network card modules;
an interrupt controller (Interrupt controller), configured to control an interrupt signal of the network card; and
an Ethernet interface (Ethernet interface), configured to connect a wired Ethernet.

The bus arbiter, the CPU, the memory, the DMA controller, the interrupt controller, the Ethernet interface and the Low MAC processor are respectively hanged on the Bus. The Low MAC processor and the physical layer processor are connected via a dedicated high speed interface. The physical layer processor is respectively connected with an analog-digital converter (A/D) and a digital-to-analog converter (D/A). The radio frequency (RF) is respectively connected with an analog-digital converter (A/D), a digital-to-analog converter (D/A) and an antenna.

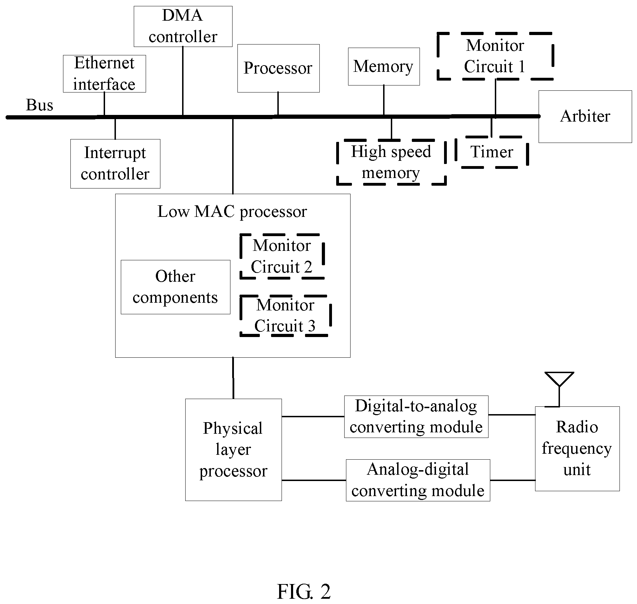

To detect various times in a Wi-Fi data transmission process, the embodiment of the present invention provides a Wi-Fi wireless network card based on the general structure of the above-mentioned Wi-Fi wireless network card, which including a monitoring apparatus (as shown in Fig. 2). The monitoring apparatus is composed of three monitor circuits (Monitor Circuit), a high speed storage area (Flash) and a group of timers (Timer) (modules marked by dotted frames shown in Fig. 2), wherein functions and specific link relations of all functional modules in the monitoring apparatus are respectively as follows.

The first monitor circuit (Monitor 1, monitor circuit 1) is connected with the bus and a memory module and is configured to record time information Tbuffer of putting data to be sent into the memory.

The first monitor circuit is responsible for monitoring the memory of network card and recording the time information Tbuffer of putting data to be sent into the memory. It is connected to the bus Bus and is connected with the memory module via a dedicated interface.

The second monitor circuit (Monitor 2, monitor circuit 2) is arranged in the Low MAC processor and is configured to record a time Tsend when NAV avoidance expires and a channel competition succeeds.

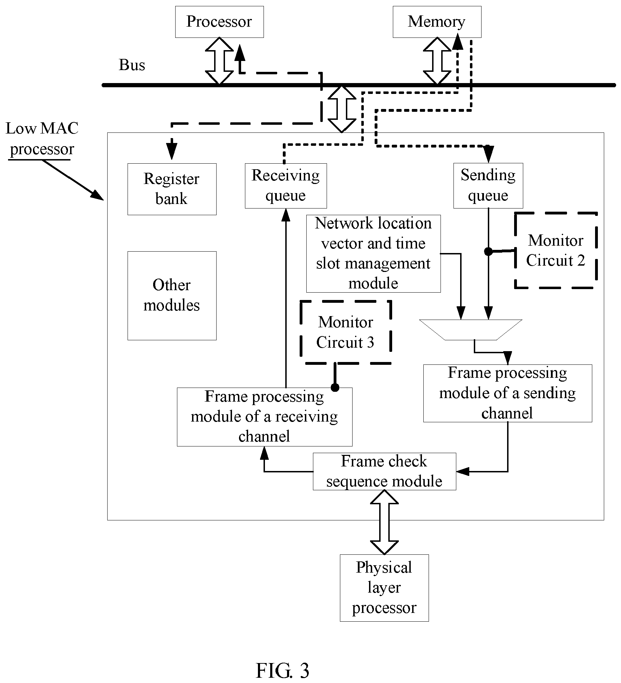

The second monitor circuit is responsible for recording the time Tsend when NAV avoidance expires and a channel competition succeeds, namely a time when data formally enters a flow of sending processing. The monitor circuit 2 is located in the Low MAC processor, and a specific connection manner of the monitor circuit in the Low MAC processor is as shown in Fig. 3.

The third monitor circuit (Monitor 3, monitor circuit 3) is arranged in the Low MAC processor and is configured to record a time Tack when ACK is correctly received.

The third monitor circuit is responsible for recording the time Tack when ACK is correctly received. The monitor circuit 3 is located in the Low MAC processor, and a specific connection manner is as shown in Fig. 3.

The Flash high speed memory is configured to store time information collected by the above-mentioned three monitor circuits, and the Flash high speed memory is directly connected to the Bus.

The timer (Timer) is responsible for generating a periodic signal and is configured to refresh monitoring object information and report monitoring information. The timer (Timer) is directly connected to the Bus (the internal of the Low MAC processor is amplified in Fig. 3).

As the monitoring apparatus provided by the present invention is closely related with the Low MAC processor, a specific structure, and functions and connection relations of functional modules of a typical Low MAC processor in the prior art are described herein, specifically including:

a sending queue (TX FIFO), used for a processor to cache a small amount of data to be sent, and the sending queue (TX FIFO) reads data from the memory of the network card through the bus Bus;

a receiving queue (RX FIFO), used for a processor to cache a small amount of received data, and the receiving queue (RX FIFO) writes data into the memory of the network card through the bus Bus;

a network location vector and time slot management module (NAV & slot manager), configured to determine whether a wireless channel is idle, whether CSMA/CA avoidance expires and whether a time slot timeouts;

a frame processing module of a sending channel (TX frame parser), configured to send an assembled frame and add frame header information;

a frame processing module of a receiving channel (RX frame parser), configured to receive a disassembled frame and analyze frame header information;

a frame check sequence module (FCS), configured to add or delete a check sequence at the end of a frame and be connected with a physical layer processor through a dedicated high speed interface;

a register bank (Register bank) group, configured for information interaction between the CPU and the Low MAC processor, being connected with the CPU through the bus Bus; and

other modules (Other modules), refer to other modules which are not directly revelent with the monitoring apparatus provided by the present invention.

The TX FIFO module is connected with the Memory through the bus Bus. The TX FIFO module and the NAV & slot manager module are connected to a switching circuit and are then connected to the TX frame parser module from the switching circuit. The TX frame parser module is connected to the FCS module. The FCS module is connected with a PHY layer processor through a dedicated high speed interface. The FCS module is connected to the RX frame parser module. The RX frame parser module is connected to the RX FIFO module. The RX FIFO module is connected to the Memory through the bus Bus.

As shown in Fig. 3, two monitor circuits, namely Monitor 2 and Monitor 3 are added in the Low MAC processor provided by the present invention, wherein functions of the Monitor 2 and Monitor 3 are realized as follows.

The Monitor 2 monitors a link between the TX FIFO and the switching circuit and records a time Tsend of sending data of a data packet once the data packet matched with the monitoring object (in the embodiment of the present invention, in order to monitor some users, a specical object is set as a monitoring object correspondingly before the monitoring operation is carried out) occurs (in the embodiment, a user terminal may determine whether the data packet is a data packet corresponding to the monitoring object via an MAC address or BSSID carried in the data packet).

The Monitor 3 is mounted on the RX frame parser module, and once an ACK frame is obtained by analyzing, the RX frame parser module will notify the Monitor 3. In a typical Wi-Fi network card processing flow, after receiving the ACK frame, the RX frame parser confirms the sending of a frame is successful and then directly discards it. The Monitor 3 matches the received ACK frame with the monitoring object, namely compares an address carried in the ACK frame with an MAC address of the monitoring object. If they are the same, the time Tack of receiving the ACK is recorded; if not, it is discarded. Information (e.g., an MAC address or a BSSID) of the monitoring object necessary for the Monitor 2 and the Monitor 3 is obtained by reading a register bank (Register bank). Related information of the register bank is written by the CPU.

Based on hardware composition of the monitoring apparatus provided by the embodiment of the present invention, the embodiment of the present invention provides a method for obtaining an actual time of data sending in Wi-Fi network, including:

monitoring whether a data packet to be sent is stored in a Memory, further detecting whether the data packet to be sent is a data packet sent by a preset monitoring object after determining the existence of the data packet to be sent, and recording a time Tbuffer of putting the data packet to be sent into the buffer queue when determining that the data packet to be sent is the data packet sent by the preset monitoring object;

monitoring a channel between a data sending queue TX FIFO and a frame processing module TX frame parser of a sending channel, and recording a sending time Tsend of a data packet being sent when monitoring that the data packet being sent is a data packet sent by the preset monitoring object; and

monitoring an RX frame parser module, and recording an ACK feedback time Tack if it received an ACK frame which matches with the monitoring object.

In the embodiment of the present invention, valuses of the three time may be detected in a parallel procession, and are not limited to the sequence of the above-mentioned steps.

In the embodiment, in order to reach purposes of monitoring a sending process of each data packet and monitoring a user terminal, the detecting whether the data packet to be sent is an arbitrary data packet sent by the preset monitoring object includes:

obtaining a target MAC address, a data type, a service type or a source MAC address of the data packet to be sent from the data packet to be sent; and

determining whether the obtained target MAC address, data type, service type or source MAC address of the data packet to be sent is the same as a first preset parameter (the match may be performed with the MAC address only, or the combination of several parameters in the above-mentioned parameters), and if so, determining that the data packet to be sent is a data packet sent by the preset monitoring object.

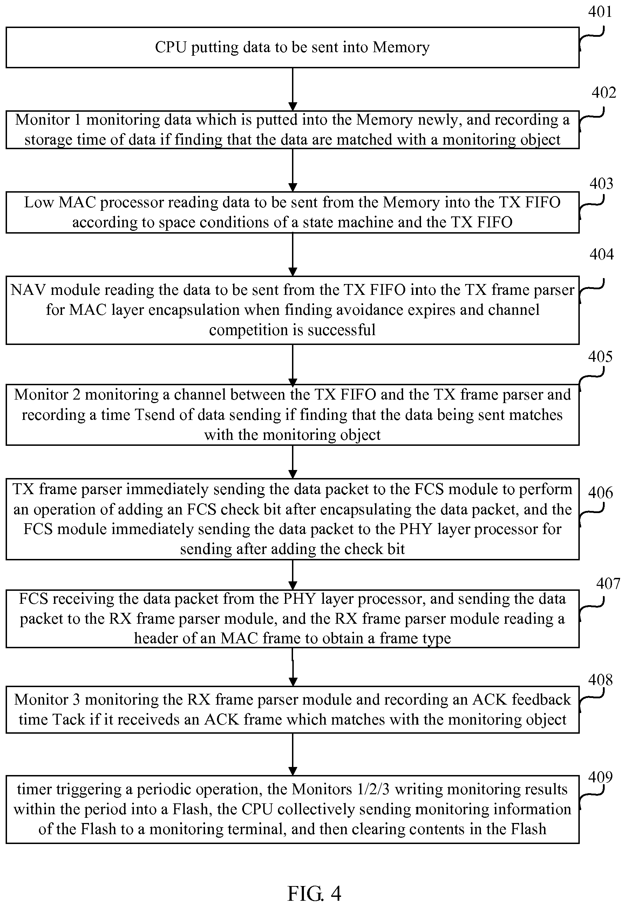

Fig. 4 is a schematic diagram of a flow of a method for monitoring a time of data transmission. To better understand the above-mentioned technical solutions, the above-mentioned technical solutions will be illustrated below in detail in combination with an accompanying drawing and a specific implementation manner. In the specific embodiment, to describe an acquisition of each time value more clearly, acquisition steps of each time value is described in the interaction process of data transmission in detail, and the specific steps include:

step 401, the CPU putting data to be sent by a Wi-Fi wireless network card, which comes from a high level, into a cache Memory;

step 402, the Monitor 1 monitoring data which is putted into the Memory newly, and recording a storage time Tbuffer of data if finding that the data are matched with a monitoring object;

step 403, the Low MAC processor reading data to be sent from the Memory into the TX FIFO according to space conditions of a state machine and the TX FIFO;

step 404, the NAV module reading the data to be sent from the TX FIFO into the TX frame parser for MAC layer encapsulation when finding avoidance expires and channel competition is successful;

step 405, the Monitor 2 monitoring a channel between the TX FIFO and the TX frame parser and recording a time Tsend of data sending if finding that the data being sent matches with the monitoring object;

step 406, the TX frame parser immediately sending the data packet to the FCS module to perform an operation of adding an FCS check bit after encapsulating the data packet, and the FCS module immediately sending the data packet to the PHY layer processor for sending after adding the check bit;

step 407, the FCS receiving the data packet from the PHY layer processor, and sending the data packet to the RX frame parser module immediately after passing the FCS check bit operation, and the RX frame parser module reading a header of an MAC frame to obtain a frame type;

step 408, the Monitor 3 monitoring the RX frame parser module and recording an ACK feedback time Tack if it receiveds an ACK frame which matches with the monitoring object; and

step 409, a timer triggering a periodic operation, the Monitors 1/2/3 writing monitoring results within the period into a Flash, the CPU collectively sending monitoring information of the Flash to a monitoring terminal, and then clearing contents in the Flash.

In the embodiment of the present invention, in a process of recording the three time values, at first, taking each AP as a unit, data transmitted by each AP are divided for the first time. Then, the data transmitted by each AP may be further divided according to an MAC address of each data packet, after which each user is taken as a unit for each data set. Each of the "sent data matching with the monitoring object" mentioned in the above-mentioned embodiment directs that services of some users are set to be monitored before carrying out the monitoring operation, so the monitoring object herein refers to some preset users. A specific matching operation may be determining whether the data packet is a data packet corresponding to a monitoring object via an MAC address or a BSSID carried in the data packet, and then recording the three times of the data packet corresponding to the MAC address or the BSSID. Therefore, the three times monitored in the embodiment may correspond to an AP and each user terminal.

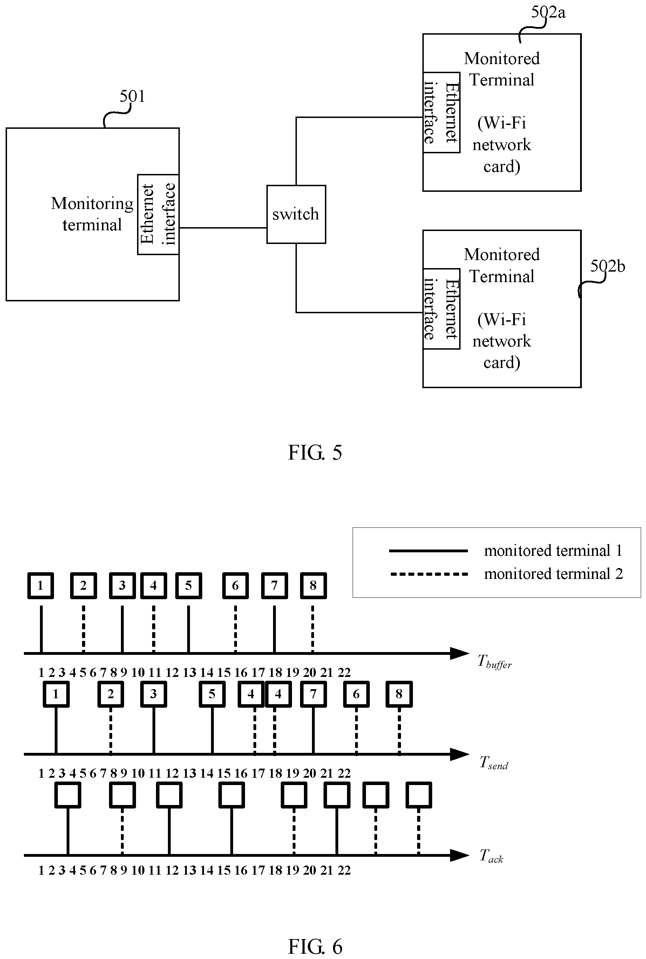

As shown in Fig. 5, according to the above-mentioned method, the present invention further provides a system for collecting monitoring information. The system is composed of a controller of a monitoring terminal and a monitoring apparatus of a monitored terminal. The monitoring terminal and the monitored terminal may be located on the same device and are interconnected via an internal bus, or located on different devices and are interconnected in a form of network cable/optical wire/wireless, etc.

The monitoring system provided by the present invention is composed of the monitoring terminal and the monitored terminal, which are interconnected and intercommunicated through a switch and an Ethernet. The monitoring terminal 501 is mainly used for selecting the monitoring object, determining a monitoring period and processing information reported by the monitored terminal. The monitored terminal (Wi-Fi network card) includes the monitoring apparatus provided by the present invention.

In the system as shown in Fig. 5, the system may be composed of one monitoring terminal 501 and two monitored terminals 502, but actually, it is merely required that the quantity of the monitored terminals is larger than or equal to 1. Time information obtained by the monitoring terminal is generally used by a network controller of WLAN (e.g., AC).

In the embodiment of the present invention, if the monitoring terminal is a desktop computer operating a monitoring program and is connected with a switch through an Ethernet interface (in addition, the monitoring terminal may also have other forms, for example, a monitoring process of a dedicated network controller, a segment of programs of an embedded monitoring board, and even a segment of the Wi-Fi network card, and so on), the monitored terminal periodically encapsulates the monitored time information into an Ethernet packet and reports the Ethernet packet to the monitoring terminal. The monitoring terminal operates a program to process the time information from one or more monitored terminals for scheduling of other resources or for the use of a network management module. The specific processing method may be:

combining, using an MAC address of a receiving terminal of each data packet as an index, a time Tbuffer of putting each data packet transmitted by different APs into a cache queue and a time Tsend of sending the data packet to the wireless channel respectively in chronological order, to form a time sequence.

According to a general structure of the above-mentioned monitoring system, it is assumed that the WLAN network is composed of one centralized scheduler and two Wi-Fi network cards, and provides a (downlink) data communication service, for example, data download, for a same user. An algorithm adopted by the scheduler is that a data packet with an odd serial number is sent by the No.1 Wi-Fi network card (corresponding to a monitored terminal 502a in Fig. 5) and a data packet with an even serial number is sent by No.2 Wi-Fi network card (corresponding to a monitored terminal 502b in Fig. 5).

After a series of work of the monitoring system, the collected time information is processed by the monitoring terminal into three time sequences, as shown in Fig. 6 (Fig. 6 is an example of monitoring time information). A first time axis is a time of caching data in different Wi-Fi network cards; a second time axis is a time of starting to send the data to the network card; and a third time axis is a time of the network card receiving an ACK. On the first time axis and the second time axis, the monitoring system may obtain a serial number corresponding to each data. However, on the third time axis (i.e., an ACK frame), the monitoring system may not obtain a serial number corresponding to each data. This is because the ACK frame regulated by the IEEE 802.11 protocol contains no serial number information. In spite of this, the decoding of the information is not inhibited.

According to contents as shown in Fig. 6, it can be seen that the time difference of Tbuffer and Tsend of data corresponding to the monitored terminal 502a (i.e., the No.1 Wi-Fi network card) is relatively shorter and regular, which generally indicates that there is more idle time of a wireless channel between the monitored terminal 502a (i.e., the No.1 Wi-Fi network card) and the user, and the competition is not intense. A data with a serial number of 4 of the monitored terminal 502b (i.e., the No.2 Wi-Fi network card) occurs at the time 14 and time 15 on the second time axis for twice, but only one ACK frame occurs at the 16 time on the third time axis, which indicates that the sending of the data with serial number of 4 is failed at the first time, and no ACK is received, then the data is retransmitted, and the ACK is received successfully. This generally indicates that a wireless channel between the No.2 network card and a user is unstable and a failure of sending is easy to arise.

It can be seen from the above example that, even only a simplest combing process and time sequence obtaining are performed on the time information monitored in the present invention, certain reference base may be provided for a scheduling algorithm. If in further cooperation with modulation and coding scheme (Modulation and Coding Scheme, MCS) information and/or channel state information (Channel State Information, CSI) obtained by other modules, the time information monitored in the present invention may be well used as an input parameter of a network adaptive algorithm, thereby improving network performance and user experience.

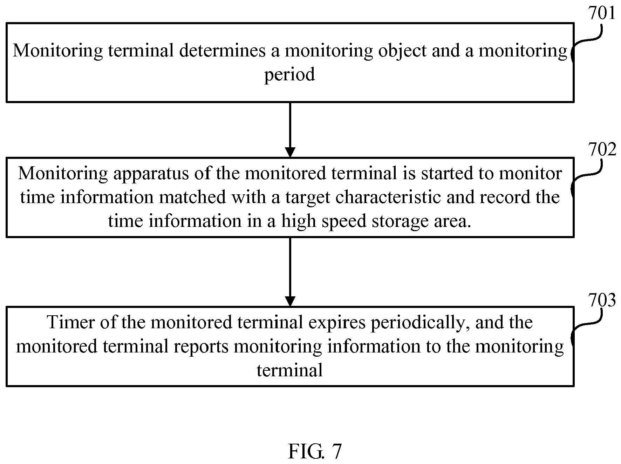

As shown in Fig. 7, based on the above-mentioned apparatus and method, the present invention further provides a Wi-Fi monitoring method, specifically including following steps.

Step 701, a monitoring terminal determines a monitoring object (generally refers to a specific MAC address or BSSID) and a monitoring period (used to configure a timer).

Information of the monitoring object which the monitoring terminal is going to determine includes, but not limited to a target MAC address, a data (service) type and a source MAC address. The target MAC address is necessary information. A duration of the monitoring period may be flexibly selected according to a requirement of an algorithm and a strategy on time accuracy.

In the embodiment, a monitoring period adopted may be 1s. The monitoring terminal encapsulates information of the monitoring object and the monitoring period in an Ethernet packet and sends the Ethernet packet to the Ethernet interface of a monitored terminal, and a CPU of the monitored terminal decodes the information. The CPU of the monitored terminal directly configures the information of the monitoring object to the monitor circuit 1 and writes the information of the monitoring object into a register bank (Register bank) of a Low MAC processor, and a monitor circuit 2 and a monitor circuit 3 read the information of the monitoring object from the register bank. The CPU of the monitored terminal configures a timer via the monitoring period to periodically trigger a report operation.

Step 702, the monitoring apparatus of the monitored terminal is started to monitor time information matched with a target characteristic and record the time information in a high speed storage area. The time information includes a time Tbuffer of putting each data packet into a buffer queue and a time Tsend of sending each data packet to a wireless channel, and an ACK feedback time Tack after each data packet is sent, when each AP sends a data packet within the latest preset period.

Step 703, the timer of the monitored terminal expires periodically, and the monitored terminal reports monitoring information to the monitoring terminal. The monitoring terminal collects and processes the obtained monitoring information for the use of other modules.

The expiration of the timer triggers the CPU of the monitored terminal to implement the report operation. The CPU instructs the monitor circuits 1/2/3 to write information monitored within a former period into a Flash high speed memory respectively at first. Then, the CPU collectively packages data in the Flash into an Ethernet packet. In the packaging process, besides the three kinds of time information obtained by statistics, the CPU adds at least two kinds of additional information in the load: (1) an MAC address of the network card, and (2) a current system clock of the network card. Finally, the CPU sends the Ethernet packet to the monitoring terminal through the Ethernet interface.

There are various methods to process the information, and embodiment 1 merely gives a simplest method. Namely, the three kinds of time information from different monitored terminals are combined, using an MAC address of data receiving terminal as an index, to form three time sequences for the scheduling of other resources and for the use of the network management module.

The monitoring method, apparatus and system provided above may be used for monitoring various data transmission times in the Wi-Fi network, in the following embodiments, the Wi-Fi network is adjusted based on the above-mentioned monitored time values, two embodiments are provided below for further illustration.

**Embodiment 2**

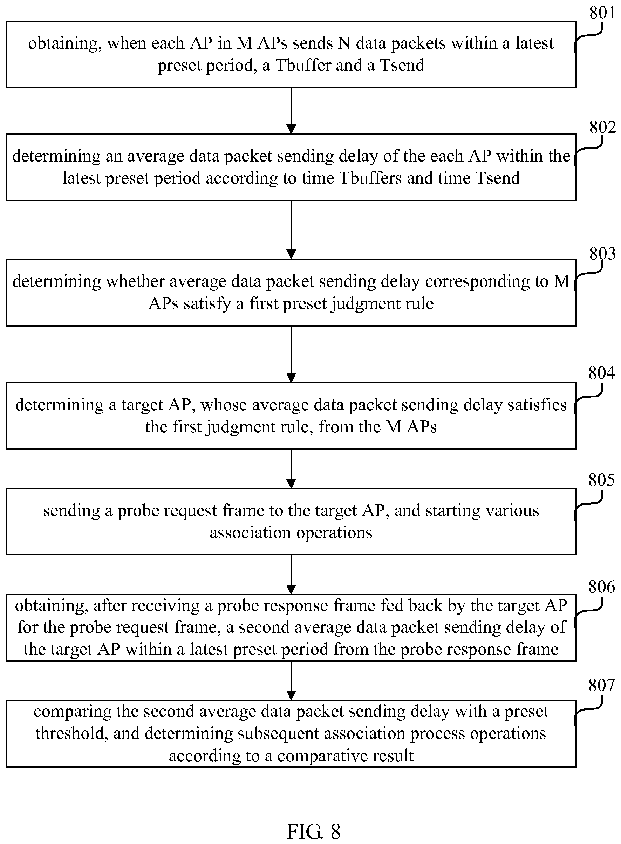

At first, data sending delay information is calculated based on monitored time values, load balance of STA between the APs may be achieved based on an associated AP selection algorithm of the data sending delay, and the unreasonable state that the AP with a strong RSSI value is over loaded while the AP with a weak RSSI value nearly has no associated STA is changed, so that the throughput of the WLAN network is improved. When a target AP needs to be connected for data transmission, an embodiment of the present invention further provides a Wi-Fi monitoring method, and a specific implementation manner of the present invention will be illustrated below in detail in combination with a accompanying drawing (as shown in Fig. 8).

Step 801, obtaining, when each AP in M APs sends N data packets within a latest preset period, a time Tbuffer of putting each data packet in the N data packets into a buffer queue and a time Tsend of sending the each data packet to a wireless channel, wherein M is an integer larger than or equal to 2, and N is an integer larger than or equal to 1.

In the embodiment, the time Tbuffer of putting each data packet of each AP into the buffer queue and the time Tsend (or called the true sending time of the data packet) of sending each data packet to the wireless channel are counted periodically, and the network state of each AP changes with time, so the data within the latest preset period are selected to serve as reference data to determine the network state of the corresponding AP in the embodiment of the present invention.

Step 802, determining an average data packet sending delay of the each AP within the latest preset period according to time Tbuffers and time Tsends of each data packet in the N data packets;

In the embodiment of the present invention, since the time Tbuffer of putting each data packet into the cache queue and the time Tsend of sending each data packet to the wireless channel are obtained, a variety of manners may be thought out based on Tbuffer and Tsend to determine the actual delay time of each data packet in the sending process. In the embodiment, an optimal manner of the determining an average data packet sending delay of the each AP within the latest preset period according to time Tbuffers and time Tsends of each data packet in the N data packets is provided in the embodiment, including:

adopting a following formula to calculate the average data packet sending delay of the each AP within the latest preset period:

$$\eta = \frac{1}{N} \sum_{i=1}^{N} \left[ Tsend(i) - Tbuffer(i) \right],$$

wherein $\eta$ represents average data packet sending delay of an AP, which serves as a current calculating object, within the latest preset period, and Tbuffer (i) and Tsend (i) respectively represent a time Tbuffer (i) of putting an $i^{th}$ data packet in the N data packets into the buffer queue and a time Tsend (i) of sending the $i^{th}$ data packet to the wireless channel.

Step 803, determining whether average data packet sending delays corresponding to the M APs satisfy a first preset judgment rule.

Step 804, determining a target AP, whose average data packet sending delay satisfies the first judgment rule, from the M APs, and associating with the target AP.

In a specific application environment, optionally, the quantity of AP may be one or more. If there are a plurality of accessible APs, the determining whether the average data packet sending delays corresponding to the APs satisfy a first preset judgment rule includes:

$$\eta = \frac{1}{N} \sum_{i=1}^{N} \left[ Tsend(i) - Tbuffer(i) \right]$$

η obtained based on the formula in the above-mentioned embodiment represents the average data packet sending delay of an AP, which serves as a calculating object at the time within the latest preset period. According to a physical meaning of this value, it can be known the smaller the η is, the more the chance of sending the AP is; the larger the η is, the less the chance of sending the AP is. Therefore, in the embodiment, the smaller the η is, the better the data transmission effect of the AP is. Thus the determining whether the average data packet sending delays corresponding to the APs satisfy the first preset judgment rule may include:

performing comparison among obtained average data packet sending delays of the APs within the latest preset period, and determining a minimum first average data packet sending delay according to a result of the comparison, wherein the first average data packet sending delay satisfies the first preset judgment rule; and identifying an AP corresponding to the first average data packet sending delay as the target AP.

In an embodiment of the present invention, in order to notify an average data packet sending delay corresponding to each AP to each device which needs to transmit data through the AP, the average data packet sending delay of each AP is further sent to the device which needs to transmit data through the AP. A specific implementation manner may be:

carrying the average data packet sending delay of each AP in a periodically broadcast beacon frame (Beacon frame); carrying the average data packet sending delay of the each AP within the latest preset period in a beacon frame periodically sent by the each AP correspondingly, so that a user terminal, when monitoring a beacon frame of each AP in a plurality of APs in a peripheral area, obtains an average data packet sending delay of a corresponding AP within the latest preset period from various beacon frames monitored.

The device which needs to transmit data through the AP (a network side device and a user terminal device) respectively monitors a beacon frame of each AP in a plurality of APs in the surrounding area, and respectively obtains the average data packet sending delay of a corresponding AP within the latest preset period from a monitored beacon frame.

Since the average data packet sending delay of each AP periodically broadcasted by the beacon frame may result in a certain delay in data acquisition, in order to further determine whether a current network state of the target AP satisfies a condition, the embodiment further includes a step of comfirming the target AP: after the determining the target AP with the average data packet sending delay satisfying the first judgment rule from the M APs, the method further includes:

step 805, sending a probe request frame (Probe_Request) to the target AP, and starting various association operations.
in the embodiment of the present invention, the associated operations refer to all the operations of the STA accessing the AP and regulated by the IEEE 802.11 protocol, specifically including the following three pairs of handshaking processes: Probe_Request and Probe_Response, Authentication_Request and Authentication_Response, and Association_Request and Association_Response.

Step 806, obtaining, after receiving a probe response frame fed back by the target AP for the probe request frame, a second average data packet sending delay of the target AP within a latest preset period from the probe response (Probe_Response) frame.

Step 807, comparing the second average data packet sending delay with a preset threshold, and if the second average data packet sending delay is smaller than the preset threshold, continuing subsequent operations of an association process with the target AP to complete the association process; if not, stopping the association process with the target AP (namely subsequent association process operations are determined according to a comparative result). The subsequent association process herein specifically refers to the two pairs of handshaking processes: Authentication_Request and Authentication_Response, and Association_Request and Association_Response.

In the embodiment of the present invention, in step 801, the " time Tbuffer of putting each data packet in N data packets into a buffer queue and a time Tsend of sending each data packet to a wireless channel are obtained respectively, when each AP in M APs sends the N data packets within a latest preset period" are achieved by the method, apparatus and system provided by Fig. 1 to Fig. 7.

**Embodiment 3**

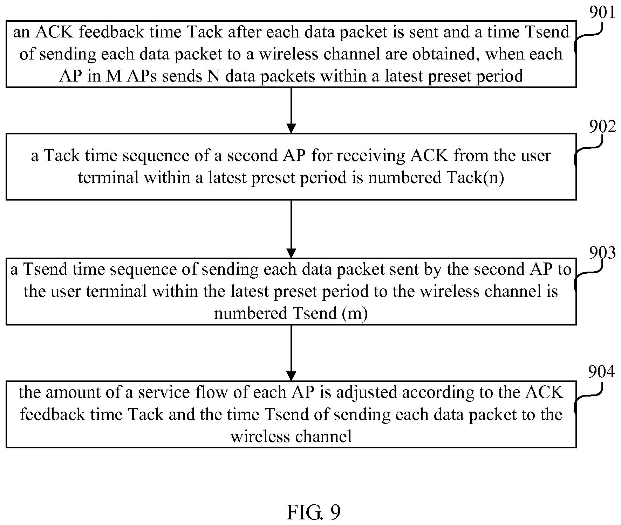

The monitored time values are conducive to improving the performance of a QoS optimization algorithm and a collaborative communication algorithm and improving the throughput of the WLAN network and the utilization efficiency of spectrum resources. Based on the target, an embodiment of the present invention further provides a Wi-Fi monitoring method, for adjusting an amount of service flow of each AP within the next preset period based on the time values obtained within the latest preset period. When a target AP needs to be connected to carry out data transmission, a specific implementation manner of the present invention will be illustrated below in detail in combination with an accompanying drawing (as shown in Fig. 9).

Step 901, an ACK feedback time Tack after each data packet is sent and a time Tsend of sending each data packet to a wireless channel are obtained respectively, when each AP in M APs sends N data packets within a latest preset period.

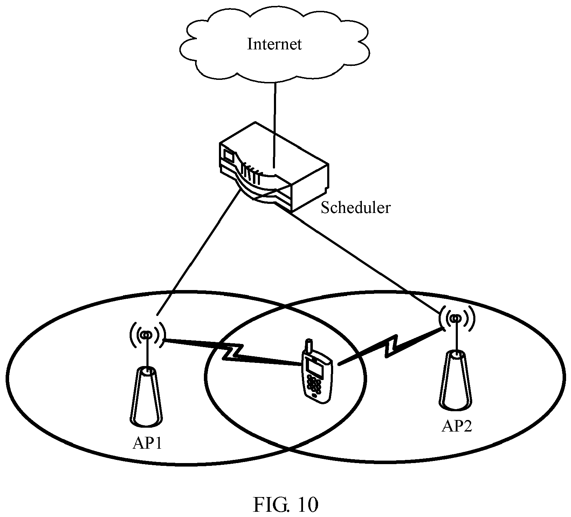

In the embodiment, using a network structure as shown in Fig. 10 as an example, a scheduler (Scheduler) is connected with an AP1 and an AP2 through a wired network. A user STA1 is located in a cross area of wireless coverage of the AP1 and the AP2. A user data flow from Internet goes through the scheduler at first, then passes the AP1 or the AP2 and is finally sent to the STA1.

The scheduler implements a function of a monitoring terminal, and the AP1 and the AP2 implement a function of a monitored terminal. The AP1 and AP2 periodically report time information Tbuffer, Tsend, Tack measured at local (the monitored terminal) to the scheduler (the monitoring terminal).

In the step 901, M APs may be two APs, which are respectively the AP1 and the AP2.

In the embodiment, to judge the current network via the ACK feedback time Tack and the time Tsend of sending each data packet to the wireless channel more conveniently, two time sequences may be formed via the two above-mentioned time values, and then subsequent judgment is determined via the time sequences. The embodiment may further include a step 902 and a step 903.

Step 902, a Tack time sequence of the first AP in the M APs for receiving ACK from the user terminal within a latest preset period is numbered Tack(n), and the quantity K of elements of the Tack(n) sequence within the latest preset period is counted, wherein Tack(n), n=1, 2, 3, ..., K.

In the embodiment of the present invention, a flow condition of each AP will be detected periodically, so a preset period is determined according to a specific application condition. In addition, the first AP is an arbitrary one in the M APs. Moreover, the user terminals may also be all user terminals associated with all the APs, or several particular user terminals may be selected, by setting a corresponding rule according to a specific monitoring demand, from all the STAs connected with the AP to serve as the monitoring object.

For example, in a network topology as shown in Fig. 10, an AP1 respectively receives an ACK from a STA1 within a period of 1000ms at the times of 25ms, 150ms, 550ms and 630ms, and thus there are 4 ACK times in total, namely, Tack (1)=25, Tack (2)=150, Tack (3)=550, Tack (4)=630 after the numbering operation is carried out.

Step 903, a Tsend time sequence of sending each data packet sent by the first AP to the user terminal within the latest preset period to the wireless channel is numbered Tsend (m), and the quantity L of elements of the Tsend (m) sequence within the latest preset period is obtained by counting, wherein m=1, 2, 3, ..., M.

For example, in the network topology as shown in Fig. 10, the AP1 respectively sends data packets to the STA1 within a period of 1000ms at the times of 5ms, 100ms, 130ms, 500ms and 600ms for five times, namely Tsend (1)=5, Tsend (2)=100, Tsend (3)=130, Tsend (4)=500, Tsend (5)=600 after the numbering operation in step 903 is carried out. In addition, since the ACK information is not absolutely received once the data are sent, the quantity of the Tack sequence is smaller than or equal to the quantity of the Tsend sequence, and the quantities of the elements of the two sequences are not necessarily equal in the embodiment of the present invention.

Moreover, in the embodiment of the present invention, since the data within a latest former preset period are calculated, the specific implementation sequence of step 902 and step 903 is not limited, and step 902 and step 903 may also be implemented at the same time.

Step 904, the amount of a service flow of each AP is adjusted according to the ACK feedback time Tack and the time Tsend of sending each data packet to the wireless channel.

In the embodiment of the present invention, the amount of the service flow of each AP is adjusted according to the ACK feedback time Tack and the time Tsend of sending each data packet to the wireless channel in a plurality of specific implementation manners, and two optimal implementation manners are provided as follows.

Manner 1: the amount of service flow of each AP is adjusted through the difference value of the ACK feedback time Tack and the time Tsend of sending each data packet to the wireless channel, and specific implementation steps may be as follows.

a, sifting elements in the Tsend (m) time sequence and obtaining, after invalid elements in the Tsend (m) are sifted out, a T'send(n) time sequence, wherein the quantity of sequence elements in T'send(n) sequence equals to that in Tack(n).

Since the ACK information is not absolutely received once the data are sent and some invalid elements exist in the Tsend (m) sequence, the invalid elements existing in the Tsend (m) need to be sifted out, and a specific implementation step is as follows:

the sifting the elements in the Tsend (m) time sequence and the obtaining, after the invalid elements in Tsend (m) are sifted out, the T'send(n) time sequence comprises:

traversing a first element to an $(L-1)^{th}$ element in the Tsend (m) time sequence, and if there is a Tack(n) time recording point for an $m^{th}$ element within a time interval with the $m^{th}$ element itself as a starting point and a next element as an end point, retaining the $m^{th}$ element; if there is no Tack(n) time recording point, deleting the $m^{th}$ element, wherein $1 \le m \le L$-1; and

retaining, for an $L^{th}$ element in the Tsend (m) time sequence, the $L^{th}$ element if there exists a Tack(n) time recording point within a fixed time length $\tau$ after the $L^{th}$ element; on the contrary, deleting the $L^{th}$ element, wherein the $L^{th}$ element is a last element in the Tsend (m) time sequence.

The above-mentioned step is illustrated, using a time sequence as an example, as follows.

If the Tsend time sequence includes L elements, then from the first element Tsend (1) to the $(L-1)^{th}$ element Tsend (L-1), if a Tack(n) time recording point exists within a time interval with the $(m-1)^{th}$ element Tsend (m-1) as a starting point and the $m^{th}$ element Tsend (m) as an end point, the Tsend (m-1) element is retained; if the Tack(n) time recording point does not exist, the Tsend (m-1) element is screened out;

aiming at the last element Tsend(L) element of the time sequence, if the Tack(n) time recording point exists within a fixed time length $\tau$ ($\tau$ may be set as 50ms in embodiment 3) after Tsend(L), the Tsend(L) element is retained; on the contrary, the Tsend(L) element is screened out.

According to the examples as shown in step 902 and step 903, in the element screening out step, Tsend (2)=100 will be screened out, and the other four Tsend elements are retained. After screening out the elements, the quantity of the rest elements in Tsend is equal to the quantity of the elements of Tack, and the elements may be marked as T'send(n), Tack(n), n=1, 2, 3, ..., K.

b, obtaining a first difference value between each sequence element in the T'send(n) time sequence and a corresponding sequence element in the Tack(n) time sequence, averaging first difference values through adopting a following formula to calculate an average difference value β of the first AP within the latest preset period:

$$\beta = \frac{1}{K} \sum_{i=1}^{K} \left[ Tack(i) - T'send(i) \right];$$

and

adjusting, according to an inverse relation between an amount of a service flow and β, a service flow of the first AP within a next preset period, wherein β represents a first average difference value of an AP, which serves as a current calculating object, within the latest preset period, and Tack (i) and T'send(i) each represents a time of an $i^{th}$ time sequence element in K time sequence elements.

Manner 2: the adjusting the amount of the service flow of the each AP according to the ACK feedback times Tacks and the times Tsends of sending each data packet to the wireless channel, specific implementation steps of which may be as follows:

obtaining a ratio $\alpha$ of the K, which is the quantity of elements in the Tack(n) time sequence, to the L, which is the quantity of elements in the Tack(m) time sequence, wherein $0 \le \alpha \le 1$; and adjusting, according to a proportional relation between the amount of the service flow and $\alpha$, the service flow of the first AP within a next preset period.

In a specific application environment, the ACK information will not be received if the receiving terminal does not receive data or in some other situations. Thus the ratio of the quantity of sequence elements in the Tack (n) time sequence and the Tsend time sequence (namely the ratio of the quantity of received ACK to the quantity of sent data packets) indicates a success rate of data transmission. Therefore, in an embodiment, a best situation is that the quantity of the sequence elements in the Tack (n) time sequence equals with that in the Tsend time sequence. Thus the closer the is to 1, the larger the service flow within the next preset period is.

The method provided by the above-mentioned embodiment may be used for providing information of several key times of sending data for a WLAN network manager and/or a Wi-Fi network card, including: (1) the time of putting the data into the cache queue, (2) the time of sending the data to the wireless channel, and (3) the time of receiving ACK corresponding to the sent data.

Further, in embodiment 2 of the present invention, data sending delay information is obtained based on the time of putting the data in the cache queue and the time of sending the data to the wireless channel, and the AP with the best network state is selected for the user based on the associated AP selection algorithm of the sending delay information. Load balance of STA between the APs may be achieved, and the unreasonable state that the AP with a strong RSSI value is over loaded while the AP with a weak RSSI value nearly has no associated STA is overcome, so that the throughput of the WLAN network is improved.

In addition, the time information obtained by real-time measurement and statistic is adopted in the present invention to help to improve the performance of a QoS optimization algorithm and a collaborative communication algorithm and help to improve the throughput of the WLAN network and the utilization efficiency of spectrum resources.

**Embodiment 4**

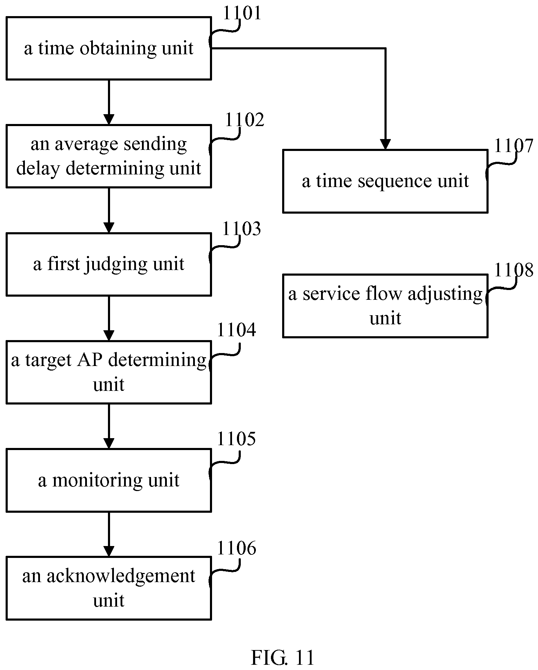

Based on the method provided by embodiment 2, data sending delay information is calculated based on the monitored time values, load balance of STA between the APs may be achieved based on the associated AP selection algorithm of the data sending delay, and the unreasonable state that the AP with a strong RSSI value is over loaded while the AP with a weak RSSI value nearly has no associated STA is changed, so that the throughput of the WLAN network is improved. The embodiment of the present invention provides a Wi-Fi monitoring apparatus, and as shown in Fig. 11, the Wi-Fi monitoring apparatus provided by the embodiment of the present invention specifically includes:

    a time obtaining unit 1101, configured to obtain, when each AP in M APs sends N data packets within a latest preset period, a time Tbuffer of putting each data packet in the N data packets into a buffer queue and a time Tsend of sending the each data packet to a wireless channel, wherein M is an integer larger than or equal to 2, and N is an integer larger than or equal to 1;
    an average sending delay determining unit 1102, configured to determine an average data packet sending delay of the each AP within the latest preset period according to times Tbuffers and times Tsends of each data packet in the N data packets;
    a first judging unit 1103, configured to determine whether average data packet sending delays corresponding to the M APs satisfy a first preset judgment rule; and
    a target AP determining unit 1104, configured to determine a target AP, whose average data packet sending delay satisfies the first judgment rule, from the M APs, and associate with the target AP.

In the embodiment of the present invention, since the time Tbuffer of putting each data packet into the cache queue and the time Tsend of sending each data packet to the wireless channel are obtained, a variety of manners may be thought out based on Tbuffer and Tsend to determine the actual delay time of each data packet in the sending process. Then the average sending delay determining unit is specifically configured to adopt a following formula to calculate the average data packet sending delay of the each AP within the latest preset period:

$$\eta = \frac{1}{N} \sum_{i=1}^{N} \left[ Tsend(i) - Tbuffer(i) \right],$$

wherein $\eta$ represents average data packet sending delay of an AP, which serves as a current calculating object, within the latest preset period, and Tbuffer (i) and Tsend (i) respectively represent a time Tbuffer (i) of putting an $i^{th}$ data packet in the N data packets into the buffer queue and a time Tsend (i) of sending the $i^{th}$ data packet to the wireless channel.

For the above-mentioned average delay determining method, the target AP determining unit is specifically configured to performing comparison among obtained average data packet sending delays of the APs within the latest preset period, and determine a minimum first average data packet sending delay according to a result of the comparison, wherein the first average data packet sending delay satisfies the first preset judgment rule; and identifying an AP corresponding to the first average data packet sending delay as the target AP.

Further, the apparatus further comprises: an average sending delay notifying unit 1105, the monitoring unit 1105 configured to carry the average data packet sending delay of the each AP within the latest preset period in a beacon frame periodically sent by the each AP correspondingly, so that a user terminal, when monitoring a beacon frame of each AP in a plurality of APs in a peripheral area, obtains an average data packet sending delay of a corresponding AP within the latest preset period from various beacon frames monitored.

Since the average sending delay of each AP data packet periodically broadcasted by a beacon frame may result in a certain delay in data acquisition, in order to further determine the target AP conforming to a condition, the apparatus further includes an acknowledgement unit 1106, wherein the acknowledgement unit 1106 is connected with the target AP determining unit 1104.

The acknowledgement unit is configured to send a probe request frame to the target AP and start various association operations; obtain, after receiving a probe response frame fed back by the target AP for the probe request frame, a second average data packet sending delay of the target AP within a latest preset period from the probe response frame; and compare the second average data packet sending delay with a preset threshold, and if the second average data packet sending delay is smaller than the preset threshold, continue to carry out subsequent operations in an association process with the target AP to complete the association process; if not, stop the association process with the target AP.

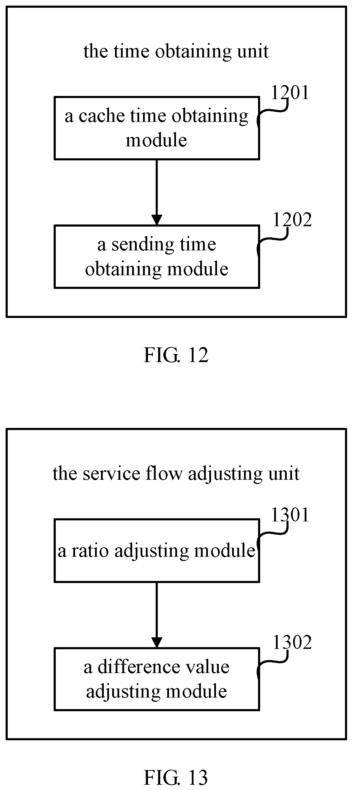

As shown in Fig. 12, in an embodiment, the time of putting the data into the cache queue and the actual data sending time need to be obtained respectively, thus the time obtaining unit 1101 in the apparatus includes:

a cache time obtaining module 1201, configured to monitor whether a data packet to be sent is stored in a memory, detect, after determining the existence of the data packet to be sent, whether the data packet to be sent is a data packet sent by a preset monitoring object, and record, when determining that the data packet to be sent is a data packet sent by the preset monitoring object, a time Tbuffer of putting the data packet to be sent into the buffer queue; and

a sending time obtaining module 1202, configured to monitor a channel between a data sending queue TX FIFO and a frame processing module TX frame parser of a sending channel, and record, when monitoring that a data packet being sent is a data packet sent by the preset monitoring object, the sending time Tsend of the data packet being sent.

The time values monitored by the apparatus provided by the present invention are conducive to improving the performance of a QoS optimization algorithm and a collaborative communication algorithm and improving the throughput of the WLAN network and the utilization efficiency of spectrum resources. Based on the method in embodiment 3 and the above-mentioned target, the embodiment of the present invention further provides a Wi-Fi monitoring apparatus, for adjusting the service flow size of each AP within the next preset period based on the time values obtained within the latest preset period, the time obtaining unit 1101 is further configured to respectively obtain an ACK feedback time Tack after each data packet is sent, when each AP in the M APs sends the N data packets within the latest preset period; then the apparatus further includes:

a service flow adjusting unit 1108, configured to adjust an amount of service flow of the each AP according to ACK feedback times Tacks and times Tsends of sending each data packet to the wireless channel.

In addition, in the embodiment, to judge the current network via the ACK feedback time Tack and the time Tsend of sending each data packet to the wireless channel more conveniently, two time sequences may be formed via the two above-mentioned time values, and then subsequent judgment is determined via the time sequences. Therefore, in the embodiment of the present invention, the apparatus further includes:

a time sequence unit 1107, configured to number Tack time sequence Tack(n) of a first AP in the M APs for receiving ACK from a user terminal within the latest preset period, and obtain the quantity K of elements in Tack(n) sequence within the latest preset period; obtain and number a Tsend time sequence sent by the first AP to the user terminal within the latest preset period to obtain Tsend (m), and obtian, by counting, the quantity of elements in Tsend (m) sequence within the latest preset period is L.

as shown in Fig. 13, in the embodiment of the present invention, the service flow size of each AP is adjusted according to the ACK feedback time Tack and the time Tsend of sending each data packet to the wireless channel in a plurality of specific implementation manners, thus according to different adjustment manners, the service flow adjusting unit 1108 in the apparatus provided by the embodiment of the present invention may include:

a ratio adjusting module 1301, configured to obtain a ratio of the K to the L, and adjust, according to a proportional relation between the amount of the service flow and $\alpha$, the service flow of the first AP within a next preset period, wherein $0 \le \alpha \le 1$;

a difference value adjusting module 1302, configured to sift elements in the Tsend (m) time sequence and obtain, after invalid elements in the Tsend (m) are sifted out, a T'send(n) time sequence, wherein the quantity of sequence elements in T'send(n) sequence equals to that in Tack(n); obtain a first difference value between each sequence element in the T'send(n) time sequence and a corresponding sequence element in the Tack(n) time sequence, averge first difference values through adopting a following formula to calculate an average

$$\beta = \frac{1}{K} \sum_{i=1}^{K} \left[ Tack(i) - T'send(i) \right];$$

difference value $\beta$ of the first AP within the latest preset period:                                                    and adjust, according to an inverse relation between an amount of a service flow and $\beta$, a service flow of the first AP within a next preset period, wherein $\beta$ represents a first average difference value of an AP, which serves as a current calculating object, within the latest preset period, and Tack (i) and T'send(i) each represents a time of an $i^{th}$ time sequence element in K time sequence elements.

Further, since the ACK information is not absolutely received once the data are sent, some invalid elements exist in the Tsend (m) sequence, the invalid elements existing in the Tsend (m) need to be sifted out, and then the difference value adjusting module 1302 sifts out the elements of the Tsend time sequence to remove invalid Tsend (m) to obtain T'send(n) in the following manner:

traversing a first element to an $(L-1)^{th}$ element in the Tsend (m) time sequence, and if there is a Tack(n) time recording point for an $m^{th}$ element within a time interval with the $m^{th}$ element itself as a starting point and a next element as an end point, retaining the $m^{th}$ element; if there is no Tack(n) time recording point, deleting the $m^{th}$ element, wherein $1 \leq m \leq L$-1; and retaining, for an $L^{th}$ element in the Tsend (m) time sequence, the $L^{th}$ element if there exists a Tack(n) time recording point within a fixed time length $\tau$ after the $L^{th}$ element; on the contrary, deleting the $L^{th}$ element, wherein the $L^{th}$ element is a last element in the Tsend (m) time sequence.

One or more technical solutions in the embodiments of the present application at least have the following technical effects:

The method provided by the above-mentioned embodiment may be used for providing information of several key times of sending data for a WLAN network manager and/or a Wi-Fi network card, including: (1) the time of putting the data into the cache queue, (2) the time of sending the data to the wireless channel, and (3) the time of receiving ACK corresponding to the sent data. Further, data sending delay information is obtained based on the time of putting the data into the cache queue and the time of sending the data to the wireless channel, and the AP with the best network state is selected for the user based on the associated AP selection algorithm of the sending delay information. Load balance of STA between the APs may be achieved, and the unreasonable state that the AP with a strong RSSI value is over loaded while the AP with a weak RSSI value nearly has no associated STA is overcome, so that the throughput of the WLAN network is improved.

In addition, the time information obtained by real-time measurement and statistic is adopted in the present invention to help to improve the performance of a QoS optimization algorithm and a collaborative communication algorithm and help to improve the throughput of the WLAN network and the utilization efficiency of spectrum resources.

## Claims

1. A wireless fidelity, Wi-Fi, monitoring method, the method comprising:

obtaining (801), by each AP in M APs when the each AP sends N data packets within a latest preset period, a time Tbuffer of putting each data packet in the N data packets into a buffer queue and a time Tsend of sending the each data packet to a wireless channel, wherein M is an integer larger than or equal to 2, and N is an integer larger than or equal to 1;
determining (802), by the each AP, an average data packet sending delay of the each AP within the latest preset period according to time Tbuffer and time Tsend of each data packet in the N data packets, wherein the each AP adopts a following formula to calculate the average data packet sending delay of the each AP within the latest preset period:

$$\eta = \frac{1}{N} \sum_{i=1}^{N} \left[ Tsend(i) - Tbuffer(i) \right],$$

wherein $\eta$ represents the average data packet sending delay of the each AP, which serves as a current calculating object, within the latest preset period, and Tbuffer (i) and Tsend (i) respectively represent a time Tbuffer (i) of putting an $i^{th}$ data packet in the N data packets into the buffer queue and a time Tsend (i) of sending the $i^{th}$ data packet to the wireless channel;
carrying, by the each AP, the average data packet sending delay of the each AP within the latest preset period in a beacon frame periodically sent by the each AP correspondingly;
obtaining, by a STA, when monitoring a beacon frame of each AP in a plurality of APs in a peripheral area, the average data packet sending delay of a corresponding AP within the latest preset period from various beacon frames monitored; and
determining (803), by the STA, whether average data packet sending delays corresponding to the M APs satisfy a first preset judgment rule, determining (804), by the STA, a target AP from the M APs, whose average data packet sending delay satisfies the first judgment rule, and associating with the target AP.

2. The method of claim 1, wherein the determining (803), by the STA, whether the average data packet sending delays corresponding to the M APs satisfy the first preset judgment rule, and determining (804) the target AP, whose average data packet sending delay satisfies the first judgment rule, from the M APs, comprises:

   performing, by the STA, comparison among obtained average data packet sending delays of the APs within the latest preset period, and determining a minimum first average data packet sending delay according to a result of the comparison, wherein the first average data packet sending delay satisfies the first preset judgment rule; and
   identifying, by the STA, an AP corresponding to the first average data packet sending delay as the target AP.

3. The method of claims 1 or 2, wherein after the determining (804), by the STA, the target AP, whose average data packet sending delay satisfies the first judgment rule, from the M APs, the method further comprises:

   sending (805), by the STA, a probe request frame to the target AP, and starting various association operations;
   obtaining (806), by the STA, after receiving a probe response frame fed back by the target AP for the probe request frame, a second average data packet sending delay of the target AP within a latest preset period from the probe response frame; and
   comparing (807), by the STA, the second average data packet sending delay with a preset threshold, and if the second average data packet sending delay is smaller than the preset threshold, continuing subsequent operations of an association process with the target AP to complete the association process; if not, stopping the association process with the target AP.

4. The method of claim 1, wherein the obtaining (801), by each AP in M APs, when the each AP in the M APs sends the N data packets within the latest preset period, the time Tbuffer of putting the each data packet in the N data packets into the buffer queue and the time Tsend of sending the each data packet to the wireless channel comprises:

   monitoring, by the each AP, whether a data packet to be sent is stored in a memory, detecting, after determining the existence of the data packet to be sent, whether the data packet to be sent is a data packet sent by a preset monitoring object, and recording, when determining that the data packet to be sent is a data packet sent by the preset monitoring object, a time Tbuffer of putting the data packet to be sent into the buffer queue; and
   monitoring, by the each AP, a channel between a data sending queue TX FIFO and a frame processing module TX frame parser of a sending channel, and recording, when monitoring that a data packet being sent is a data packet sent by the preset monitoring object, the sending time Tsend of the data packet being sent.

5. The method of claim 4, wherein the detecting whether the data packet to be sent is an arbitrary data packet sent by the preset monitoring object comprises:

   obtaining, by the each AP, from the data packet to be sent a target MAC address, a data type, a service type or a source MAC address of the data packet to be sent; and
   determining, by the each AP, whether the target MAC address, the data type, the service type or the source MAC address of the data packet to be sent, which is obtained, is the same as a first preset parameter, and if so, determining that the data packet to be sent is the data packet sent by the preset monitoring object.

6. The method of any of claims 1-5, wherein the method further comprises:

   obtaining, by an monitoring terminal, when each AP in the M APs sends N data packets within the latest preset period, an ACK feedback time Tack after each data packet is sent; and
   adjusting, by the monitoring terminal, an amount of service flow of the each AP according to ACK feedback times Tacks and times Tsends of sending each data packet to the wireless channel.

7. The method of any of claims 1-6, wherein the obtaining (801), by each AP in M APs, when the each AP sends N data packets within a latest preset period, a time Tbuffer of putting each data packet in the N data packets into a buffer queue and a time Tsend of sending the each data packet to a wireless channel comprises:

   obtaining, by the each AP, time Tbuffer through a first monitor circuit which is connected with a bus and a memory module and records time information Tbuffer of putting data to be sent into the memory.

obtaining, by the each AP, time Tsend through a second monitor circuit which is arranged in the low MAC processor and recording a time Tsend when NAV avoidance expires and a channel competition succeeds.

8. An access point, AP, comprising means to execute the method steps performed by the AP according to any of method claims 1 to 7.

**Patentansprüche**

1. Wireless-Fidelity, WI-FI, -Überwachungsverfahren, wobei das Verfahren umfasst:

Erlangen (801), durch jeden AP unter M APs, wenn alle AP N Datenpakete innerhalb einer letzten voreingestellten Periode senden, einer Zeit Tpuffer des Setzens aller Datenpakete unter den N Datenpaketen in eine Pufferwarteschlange und einer Zeit Tsend des Sendens aller Datenpakete an einen drahtlosen Kanal, wobei M eine ganze Zahl größer oder gleich 2 ist und N eine ganze Zahl größer oder gleich 1 ist;
Bestimmen (802), durch jeden der AP, einer durchschnittlichen Datenpaketsendeverzögerung aller AP innerhalb der letzten voreingestellten Periode gemäß der Zeit Tpuffer und der Zeit Tsend des Sendens aller Datenpakete unter den N Datenpaketen, wobei jeder AP eine folgende Formel anwendet, um die durchschnittliche Datenpaketsendeverzögerung aller AP innerhalb der letzten voreingestellten Periode zu berechnen:

$$\eta = \frac{1}{N} \sum_{i=1}^{N} \left[ Tsend(i) - Tpuffer(i) \right]$$ ,

wobei $\eta$ die durchschnittliche Datenpaketsendeverzögerung eines als ein aktuelles Berechnungsobjekt dienenden jeweiligen AP innerhalb der letzten voreingestellten Periode darstellt, und Tpuffer (i) und Tsend (i) eine Zeit Tpuffer (i) des Setzens eines i-ten Datenpakets unter den N Datenpaketen in die Pufferwarteschlange bzw. eine Zeit Tsend (i) des Sendens des i-ten Datenpakets an den drahtlosen Kanal darstellt;
Übertragen, durch jeden AP, der durchschnittlichen Datenpaketsendeverzögerung aller AP innerhalb der letzten voreingestellten Periode in einem Bakenrahmen ("beacon frame"), der periodisch durch jeden AP entsprechend gesendet wurde;
Erhalten, durch eine STA, wenn ein Bakenrahmen aller AP unter mehreren APs in einem Umgebungsbereich überwacht wird, der durchschnittlichen Datenpaketsendeverzögerung eines entsprechenden AP innerhalb der letzten voreingestellten Periode von verschiedenen überwachten Bakenrahmen; und
Bestimmen (803), durch die STA, ob durchschnittliche Datenpaketsendeverzögerungen, die den M APs entsprechen, eine erste voreingestellte Beurteilungsregel erfüllen, Bestimmen (804), durch die STA, eines Ziel-AP unter den M APs, dessen durchschnittliche Sendeverzögerung des Datenpakets die erste Beurteilungsregel erfüllt, und Verbinden mit dem Ziel-AP.

2. Verfahren nach Anspruch 1, wobei das Bestimmen (803), durch die STA, ob die durchschnittlichen Datenpaketsendeverzögerungen, die den M APs entsprechen, die erste voreingestellte Beurteilungsregel erfüllen, und Bestimmen (804) des Ziel-AP, dessen durchschnitte Datenpaketsendeverzögerung die erste Beurteilungsregel erfüllt, unter den M APs, umfasst:

Durchführen, durch die STA, eines Vergleichs zwischen innerhalb der letzten voreingestellten Periode erhaltenen durchschnittlichen Datenpaketsende¬verzögerungen der APs, und Bestimmen einer minimalen ersten durchschnittlichen Datenpaketsendeverzögerung gemäß einem Ergebnis des Vergleichs, wobei die erste durchschnittliche Datenpaketsendeverzögerung die erste voreingestellte Beurteilungsregel erfüllt; und
Identifizieren, durch die STA, eines AP, der der ersten durchschnittlichen Datenpaketsendeverzögerung entspricht, als Ziel-AP.

3. Verfahren nach Anspruch 1 oder 2, wobei nach dem Bestimmen (804), durch die STA, des Ziel-AP, dessen durchschnittliche Datenpaketsendeverzögerung die erste Beurteilungsregel erfüllt, unter den M APs, das Verfahren ferner umfasst:

Senden (805), durch die STA, eines Testanfragerahmens an den Ziel-AP, und Starten verschiedener Verbindungsoperationen;

Erlangen (806), durch die STA, nach dem Empfangen einer Testantwortrahmens, der durch den Ziel-AP für den Testanfragerahmen zurückgegeben wurde, einer zweiten durchschnittlichen Datenpaketsendeverzögerung des Ziel-AP innerhalb einer letzten voreingestellten Periode aus dem Testantwortrahmen; und

Vergleichen (807), durch die STA, der zweiten durchschnittlichen Datenpaketsendeverzögerung mit einem voreingestellten Schwellenwert, und, falls die zweite durchschnittliche Datenpaketsendeverzögerung kleiner als der voreingestellte Schwellenwert ist, Fortsetzen nachfolgender Operationen eines Verbindungsprozesses mit dem Ziel-AP, um den Verbindungsprozess abzuschließen; falls nicht, Beenden des Verbindungsprozesses mit dem Ziel-AP.

4. Verfahren nach Anspruch 1, wobei das Erhalten (801), durch jeden AP unter den M APs, wenn jeder AP unter den M APs die N Datenpakete innerhalb der letzten voreingestellten Periode sendet, der Zeit Tpuffer des Setzens aller Datenpakets unter den N Datenpaketen in die Pufferwarteschlange und der Zeit Tsend des Sendens aller Datenpakete an den drahtlosen Kanal umfasst:

Überwachen, durch jeden AP, ob ein zu sendendes Datenpaket in einem Speicher gespeichert ist, Erkennen, nach dem Bestimmen der Existenz des zu sendenden Datenpakets, ob das zu sendende Datenpaket ein durch ein voreingestelltes Überwachungsobjekt gesendetes Datenpaket ist, und Aufzeichnen, wenn bestimmt wird, dass das zu sendende Datenpaket ein durch das voreingestellte Überwachungsobjekt gesendetes Datenpaket ist, einer Zeit Tpuffer des Setzens des zu sendenden Datenpakets in die Pufferwarteschlange; und

Überwachen, durch jeden AP, eines Kanals zwischen einem Daten-Sendewarteschlangen-TX-FIFO und einem Rahmenverarbeitungsmodul-TX-Rahmenparser eines Sende-kanals, und Aufzeichnen, wenn bestimmt wird, dass das zu sendende Datenpaket ein durch das voreingestellte Überwachungsobjekt gesendetes Datenpaket ist, der Sendezeit Tsend des zu sendenden Datenpakets.

5. Verfahren nach Anspruch 4, wobei das Erkennen, ob das zu sendende Datenpaket ein beliebiges durch das voreingestellte Überwachungsobjekt gesendetes Datenpaket ist, umfasst:

Erhalten, durch jeden AP, aus dem zu sendenden Datenpaket, einer Ziel-MAC-Adresse, eines Datentyps, eines Diensttyps, oder einer Quell-MAC-Adresse des zu sendenden Datenpakets; und

Bestimmen, durch jeden AP, ob die Ziel-MAC-Adresse, der Datentyp, der Diensttyp, oder die Quell-MAC-Adresse des zu sendenden Datenpakets, das erhalten wurde, gleich einem ersten voreingestellten Parameter ist, und wenn dies der Fall ist, Bestimmen, dass das zu sendende Datenpaket das durch das voreingestellte Überwachungs-objekt gesendete Datenpaket ist.

6. Verfahren nach einem der Ansprüche 1 bis 5, wobei das Verfahren ferner umfasst:

Erhalten, durch ein Überwachungsterminal, wenn jeder AP unter den M APs N Datenpakete innerhalb der letzten voreingestellten Periode sendet, einer ACK-Rückkopplungszeit Tack, nachdem jedes Datenpaket gesendet wurde; und

Einstellen, durch das Überwachungsterminal, einer Menge eines Dienstflusses jedes AP gemäß ACK-Rückkopplungszeiten, Tacks, und Zeiten Tsend des Sendens jedes Datenpakets an den drahtlosen Kanal.

7. Verfahren nach einem der Ansprüche 1 bis 6, wobei das Erhalten (801), durch jeden AP unter den M APs, wenn alle AP N Datenpakete innerhalb einer letzten voreingestellten Periode senden, einer Zeit Tpuffer des Setzens jedes Datenpakets unter den N Datenpaketen in eine Pufferwarteschlange und einer Zeit Tsend des Sendens aller Datenpakete an einen drahtlosen Kanal umfasst:

Erhalten, durch jeden AP, einer Zeit Tpuffer durch eine erste Überwachungsschaltung, die mit einem Bus und einem Speichermodul verbunden ist und die Zeitinformation Tpuffer des Setzens von zu sendenden Daten in dem Speicher aufzeichnet,

Erhalten, durch jeden AP, einer Zeit Tsend durch eine zweite Überwachungsschaltung, die in dem unteren MAC-Prozessor angeordnet ist, und Aufzeichnen einer Zeit Tsend, wenn die NAV-Vermeidung abläuft und ein Kanal-Wettbewerb erfolgreich ist.

8. Zugangspunkt, AP, umfassend Mittel zum Ausführen der Verfahrensschritte, die durch den AP gemäß einem der Verfahrensansprüche 1 bis 7 durchgeführt werden.

**EP 2 999 268 B1**

**Revendications**

1. Procédé de surveillance de technologie Wi-Fi (Wi-Fi), le procédé consistant :

à obtenir (801), au moyen de chaque point d'accès (AP) dans M points d'accès, lorsque le ou chaque point d'accès envoie N paquets de données pendant la dernière période prédéfinie, un moment (Tbuffer) de placement de chaque paquet de données dans les N paquets de données dans une file d'attente de mémoire tampon et un moment (Tsend) d'envoi du ou de chaque paquet de données à un canal sans fil, dans lequel M est un nombre entier supérieur ou égal à 2 et N est un nombre entier supérieur ou égal à 1 ;
à déterminer (802), au moyen du ou de chaque point d'accès, un retard moyen d'envoi de paquets de données du ou de chaque point d'accès pendant la dernière période prédéfinie en fonction du moment Tbuffer et du moment Tsend de chaque paquet de données dans les N paquets de données, dans lequel le ou chaque point d'accès adopte la formule suivante pour calculer le retard moyen d'envoi de paquets de données du ou de chaque point d'accès pendant la dernière période prédéfinie :

$$\eta = \frac{1}{N} \sum_{i=1}^{N} [Tsend(i) - Tbuffer(i)],$$

dans lequel $\eta$ représente le retard moyen d'envoi de paquets de données du ou de chaque point d'accès qui fait office d'objet de calcul actuel, pendant la dernière période prédéfinie et Tbuffer(i) et Tsend(i) représentent respectivement un moment Tbuffer(i) de placement d'un ième paquet de données dans les N paquets de données dans la file d'attente de mémoire tampon et un moment Tsend(i) d'envoi du ième paquet de données au canal sans fil ;
à transporter, au moyen du ou de chaque point d'accès, le retard moyen d'envoi de paquets de données du ou de chaque point d'accès pendant la dernière période prédéfinie dans une trame de balise envoyée périodiquement par le ou chaque point d'accès de manière correspondante ;
à obtenir, au moyen d'une station (STA), lors de la surveillance d'une trame de balise de chaque point d'accès dans une pluralité de points d'accès dans une zone périphérique, le retard moyen d'envoi de paquets de données d'un point d'accès correspondant pendant la dernière période prédéfinie à partir des diverses trames de balise surveillées ; et
à déterminer (803), au moyen de la station, si des retards moyens d'envoi de paquets de données correspondant aux M points d'accès satisfont à une première règle d'évaluation prédéfinie, à déterminer (804), au moyen de la station, un point d'accès cible parmi les M points d'accès, dont un retard moyen d'envoi de paquets de données satisfait à la première règle d'évaluation,
et à s'associer au point d'accès cible.

2. Procédé selon leurs revendication 1, dans lequel la détermination (803), par la station, que les retards moyens d'envoi de paquets de données correspondant aux M points d'accès satisfont à la première règle d'évaluation prédéfinie, et la détermination (804) du point d'accès cible, dont un retard moyen d'envoi de paquets de données satisfait à la première règle d'évaluation, parmi les M points d'accès, consistent :

à réaliser, au moyen de la station, une comparaison entre des retards moyens d'envoi de paquets de données obtenus des points d'accès pendant la dernière période prédéfinie et à déterminer un premier retard moyen d'envoi de paquets de données minimal en fonction d'un résultat de la comparaison, dans lequel le premier retard moyen d'envoi de paquets de données satisfait à la première règle d'évaluation prédéfinie ; et
à identifier, au moyen de la station, un point d'accès correspondant au premier retard moyen d'envoi de paquets de données en tant que point d'accès cible.

3. Procédé selon les revendications 1 ou 2, dans lequel, après la détermination (804), par la station, du point d'accès cible, dont un retard moyen d'envoi de paquets de données satisfait à la première règle d'évaluation, parmi les M points d'accès, le procédé consiste en outre :

à envoyer (805), au moyen de la station, une trame de demande de sondage au point d'accès et à commencer diverses opérations d'association ;
à obtenir (806), au moyen de la station, après la réception d'une trame de sondage renvoyée par le point d'accès cible pour la trame de demande de sondage, un second retard moyen d'envoi de paquets de données du point d'accès cible pendant la dernière période prédéfinie en provenance de la trame de réponse de sondage ; et

à comparer (807), au moyen de la station, le second retard moyen d'envoi de paquets de données avec un seuil prédéfini et, si le second retard moyen d'envoi de paquets de données est inférieur au seuil prédéfini, à continuer des opérations ultérieures d'un processus d'association avec le point d'accès cible pour achever le processus d'association ; sinon, à arrêter le processus d'associations avec le point d'accès cible.

4. Procédé selon la revendication 1, dans lequel l'obtention (801), par chaque point d'accès dans M points d'accès, lorsque le ou chaque point d'accès dans les M points d'accès envoie les N paquets de données pendant la dernière période prédéfinie, du moment (Tbuffer) de placement du ou de chaque paquet de données dans les N paquets de données dans la file d'attente de mémoire tampon et du moment (Tsend) d'envoi du ou de chaque paquet de données au canal sans fil, consiste :

à surveiller, au moyen du ou de chaque point d'accès, si un paquet de données à envoyer est stocké dans une mémoire, à détecter, après la détermination de l'existence du paquet de données à envoyer, si le paquet de données à envoyer est un paquet de données envoyé par un objet de surveillance prédéfini et à enregistrer, lors de la détermination que le paquet de données à envoyer est un paquet de données envoyé par l'objet de surveillance prédéfini, un moment (Tbuffer) du placement du paquet de données à envoyer dans la file d'attente de mémoire tampon ; et
à surveiller, au moyen du ou de chaque point d'accès, un canal entre une file d'attente d'envoi de données (TX FIFO) et un analyseur de trame de transmission (TX) de module de traitement de trame d'un canal d'envoi et à enregistrer, lorsque la surveillance indiquant qu'un paquet de données qui est envoyé, est un paquet de données envoyé par l'objet de surveillance prédéfini, le temps d'envoi (Tsend) du paquet de données qui est envoyé.

5. Procédé selon la revendication 4, dans lequel la détection que le paquet de données à envoyer est un paquet de données arbitraire envoyé par l'objet de surveillance prédéfini consiste :

à obtenir, au moyen du ou de chaque point d'accès, à partir du paquet de données à envoyer une adresse de contrôle MAC cible, un type de données, un type de service ou une adresse de contrôle MAC source du paquet de données à envoyer ; et
à déterminer, au moyen du ou de chaque point d'accès, si l'adresse de contrôle MAC cible, le type de données, le type de service ou l'adresse de contrôle MAC source du paquet de données à envoyer, qui est obtenue, ou obtenu, est identique à un premier paramètre prédéfini et, si tel est le cas, à déterminer que le paquet de données à envoyer est le paquet de données envoyé par l'objet de surveillance prédéfini.

6. Procédé selon l'une quelconque des revendications 1 à 5, dans lequel le procédé consiste en outre :

à obtenir, au moyen d'un terminal de surveillance, lorsque chaque point d'accès dans les M points d'accès, envoie N paquets de données pendant la dernière période prédéfinie, un moment de rétroaction d'accusé de réception (ACK) (Tack) après que chaque paquet de données est envoyé ; et
à ajuster, au moyen du terminal de surveillance, une quantité de flux de service du ou de chaque point d'accès en fonction de moments de rétroaction d'accusé de réception (Tack) et de moments (Tsend) d'envoi de chaque paquet de données au canal sans fil.

7. Procédé selon l'une quelconque des revendications 1 à 6, dans lequel l'obtention (801), par chaque point d'accès dans M points d'accès, lorsque le ou chaque point d'accès envoie N paquets de données pendant la dernière période prédéfinie, d'un moment (Tbuffer) de placement du ou de chaque paquet de données dans les N paquets de données dans la file d'attente de mémoire tampon et d'un moment (Tsend) d'envoi du ou de chaque paquet de données à un canal sans fil, consiste :

à obtenir, au moyen du ou de chaque point d'accès, un moment (Tbuffer), par le biais d'un premier circuit de surveillance qui est raccordé à un bus et à un module de mémoire et enregistre des informations temporelles (Tbuffer) de placement de données à envoyer dans la mémoire,
à obtenir, au moyen du ou de chaque point d'accès, un temps (Tsend) par le biais d'un second circuit de surveillance qui est disposé dans le processeur MAC bas et à enregistrer un temps (Tsend) lorsqu'un évitement NAV expire et qu'une compétition de canal réussit.

8. Point d'accès (AP) comprenant des moyens pour exécuter les étapes du procédé réalisées par le point d'accès selon l'une quelconque des revendications 1 à 7 du procédé.

FIG. 1

FIG. 2

FIG. 3

CPU putting data to be sent into Memory 401

Monitor 1 monitoring data which is putted into the Memory newly, and recording a storage time of data if finding that the data are matched with a monitoring object 402

Low MAC processor reading data to be sent from the Memory into the TX FIFO according to space conditions of a state machine and the TX FIFO 403

NAV module reading the data to be sent from the TX FIFO into the TX frame parser for MAC layer encapsulation when finding avoidance expires and channel competition is successful 404

Monitor 2 monitoring a channel between the TX FIFO and the TX frame parser and recording a time Tsend of data sending if finding that the data being sent matches with the monitoring object 405

TX frame parser immediately sending the data packet to the FCS module to perform an operation of adding an FCS check bit after encapsulating the data packet, and the FCS module immediately sending the data packet to the PHY layer processor for sending after adding the check bit 406

FCS receiving the data packet from the PHY layer processor, and sending the data packet to the RX frame parser module, and the RX frame parser module reading a header of an MAC frame to obtain a frame type 407

Monitor 3 monitoring the RX frame parser module and recording an ACK feedback time Tack if it receiveds an ACK frame which matches with the monitoring object 408

timer triggering a periodic operation, the Monitors 1/2/3 writing monitoring results within the period into a Flash, the CPU collectively sending monitoring information of the Flash to a monitoring terminal, and then clearing contents in the Flash 409

FIG. 4

FIG. 5

FIG. 6

701

Monitoring terminal determines a monitoring object and a monitoring period

702

Monitoring apparatus of the monitored terminal is started to monitor time information matched with a target characteristic and record the time information in a high speed storage area.

703

Timer of the monitored terminal expires periodically, and the monitored terminal reports monitoring information to the monitoring terminal

FIG. 7

obtaining, when each AP in M APs sends N data packets within a latest preset period, a Tbuffer and a Tsend 801

determining an average data packet sending delay of the each AP within the latest preset period according to time Tbuffers and time Tsend 802

determining whether average data packet sending delay corresponding to M APs satisfy a first preset judgment rule 803

determining a target AP, whose average data packet sending delay satisfies the first judgment rule, from the M APs 804

sending a probe request frame to the target AP, and starting various association operations 805

obtaining, after receiving a probe response frame fed back by the target AP for the probe request frame, a second average data packet sending delay of the target AP within a latest preset period from the probe response frame 806

comparing the second average data packet sending delay with a preset threshold, and determining subsequent association process operations according to a comparative result 807

FIG. 8

an ACK feedback time Tack after each data packet is sent and a time Tsend of sending each data packet to a wireless channel are obtained, when each AP in M APs sends N data packets within a latest preset period — 901

a Tack time sequence of a second AP for receiving ACK from the user terminal within a latest preset period is numbered Tack(n) — 902

a Tsend time sequence of sending each data packet sent by the second AP to the user terminal within the latest preset period to the wireless channel is numbered Tsend (m) — 903

the amount of a service flow of each AP is adjusted according to the ACK feedback time Tack and the time Tsend of sending each data packet to the wireless channel — 904

FIG. 9

FIG. 10

a time obtaining unit — 1101

an average sending delay determining unit — 1102

a first judging unit — 1103

a target AP determining unit — 1104

a monitoring unit — 1105

an acknowledgement unit — 1106

a time sequence unit — 1107

a service flow adjusting unit — 1108

FIG. 11

the time obtaining unit

a cache time obtaining module — 1201

a sending time obtaining module — 1202

FIG. 12

the service flow adjusting unit

a ratio adjusting module — 1301

a difference value adjusting module — 1302

FIG. 13

**EP 2 999 268 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1133208 A2
- US 2006268906 A1